# EUROPÄISCHE PATENTSCHRIFT

(11) **EP 1 074 453 B1**
(45) Veröffentlichungstag und Bekanntmachung des Hinweises auf die Patenterteilung: **04.05.2005**
(21) Anmeldenummer: 00110867.9
(22) Anmeldetag: 23.05.2000
(51) Int. Cl.: B62D 15/02

(54) **Lenkwinkelsensor**
Steering angle sensor
Capteur de l'angle de braquage

(30) Priorität: 31.07.1999 DE 19936246; 01.03.2000 DE 10009798
(43) Veröffentlichungstag der Anmeldung: 07.02.2001
(73) Patentinhaber: Valeo Schalter und Sensoren GmbH, 74321 Bietigheim-Bissingen (DE)
(72) Erfinder: Ruff, Achim, 74354 Besigheim (DE); Wigger, Bernd, 74366 Kirchheim (DE)
(74) Vertreter: Dreiss, Fuhlendorf, Steimle & Becker

(56) Entgegenhaltungen:
- DE-A- 19 647 705
- DE-A- 19 712 869
- FR-A- 2 780 157
- US-A- 5 243 188
- PATENT ABSTRACTS OF JAPAN vol. 1998, no. 06, 30. April 1998 (1998-04-30) & JP 10 038557 A (ALPS ELECTRIC CO LTD), 13. Februar 1998 (1998-02-13)

## Beschreibung

Die Erfindung betrifft einen Lenkwinkelsensor.

Aus der DE-A-197 12 869 ist ein Lenkwinkelsensorsystem mit den Merkmalen des Oberbegriffs des Anspruchs 1 bekannt, bei dem mehrere Sensorarrays nebeneinander um die Drehachse eines Codierelements angeordnet sind. Mit diesen Sensorarrays wird eine Codescheibe abgetastet.

Der Erfindung liegt die Aufgabe zugrunde, mit geringem Aufwand die Bestimmung des Lenkwinkels zu verbessern.

Diese Aufgabe wird mit einem Lenkwinkelsensor gelöst, der die Merkmale des Anspruchs 1 aufweist.

Die Erfindung zeichnet sich dadurch aus, dass mehrere Sensorarrays radial um die Drehachse des Codierelements angeordnet sind. Vorteil einer solchen Anordnung ist, dass die Bestimmung des Lenkwinkels verbessert werden kann. Bei Verwendung eines entsprechenden Codes können sehr feine und störanfällige Strukturen auf den Codierelementen vermieden werden.

Dadurch, dass die radial angeordneten Sensorarrays lediglich das eine Codierelement abtasten und dass ein weiteres, quer zu den radial angeordneten Sensorarrays angeordnetes Sensorarray vorhanden ist, das zur Abtastung des weiteren Codierelements vorgesehen ist wird erreicht, dass mit einem eigenen Sensorelement das weitere Codierelement abgetastet wird.

Bei einer Weiterbildung der Erfindung ist vorgesehen, dass die Sensorarrays identisch ausgebildet sind. Dadurch können insbesondere Kosten bei der Fertigung der Sensorarrays eingespart werden.

Vorteilhafterweise sind die Sensorarrays in einem Abtastmodul angeordnet. Ein solches Abtastmodul kann beispielsweise als austauschbares Bauteil gefertigt werden.

Bei einer Weiterbildung der Erfindung sind die einzelnen Sensorarrays um einen Winkel δ phasenverschoben nebeneinander angeordnet. Die Größe des Winkels δ bestimmt sich dabei nach dem abzutastenden Code der Codierelemente.

Vorteilhafterweise ist das weitere Codierelement ein Kreisscheibensegment. Ein solches Kreisscheibensegment kann entsprechend kleine Abmessungen aufweisen, wodurch der Bauraum des Lenkwinkelsensors reduziert wird.

Bei einer bevorzugten Ausführung der Erfindung schaltet das eine Codierelement ein Schrittschaltwerk, das bei einer definierten Drehung des einen Codierelements das weitere Codierelement antreibt. Ein solches Schrittschaltwerk kann beispielsweise alle 360°-Drehwinkel der Lenksäule geschaltet werden; allerdings ist auch denkbar, dass ein Schalten des Schrittschaltwerks alle 180°-Drehwinkel oder bei anderen Drehwinkeln geschaltet wird. Ein Schalten zu nicht ganzzahligen Umdrehungszahlen ist deshalb vorteilhaft, um die Problematik einer gewissen Unschärfe der Zuordnung des Schaltpunktes zu vermeiden.

Bei einer alternativen Ausgestaltung der Erfindung ist denkbar, dass das eine Codierelement einen Schneckentrieb aufweist, der über einen Schieber das weitere Codierelement antreibt. Ein solcher Schneckentrieb mit zugehörigem Schieber kann kostengünstig, platzsparend und mit geringem Aufwand realisiert werden. Unter Schneckentrieb kann hierbei eine spiralförmige oder auch schraubenförmig angeordnete Mitnahmespur des Codierelements verstanden werden.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: einen erfindungsgemäßen Lenkwinkelsensor mit Schrittschaltwerk;
- Fig. 2:: einen anderen erfindungsgemäßen Lenkwinkelsensor mit Schneckentrieb;
- Fig. 3 u. 4:: zwei verschiedene Ausführungsarten eines Abtastmoduls.

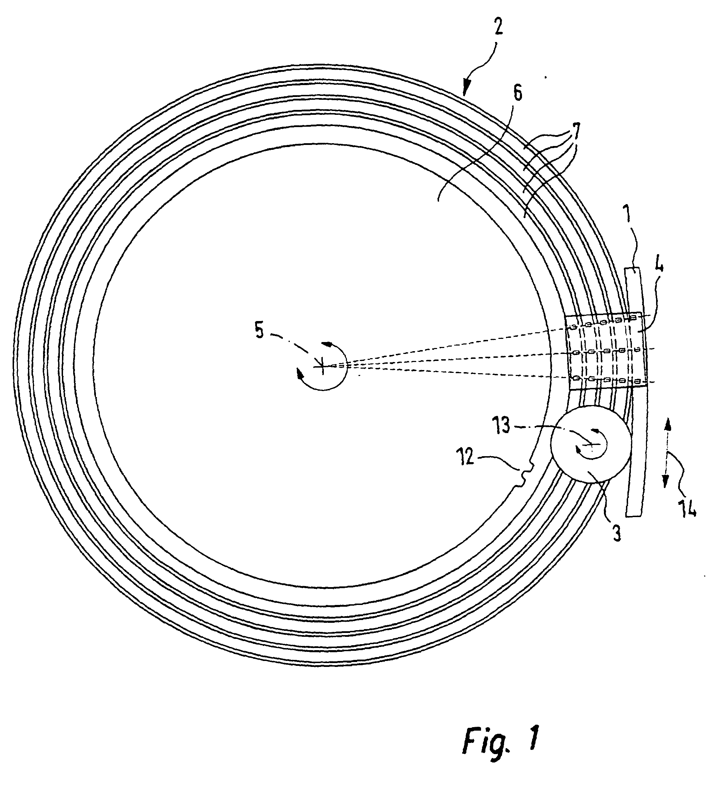

In der Fig. 1 ist ein Lenkwinkelsensor zur Bestimmung des Lenkwinkels eines Fahrzeuges mit zwei Codierelementen 1 und 2, einem Schrittschaltwerk 3 und einem die Codierelemente 1 und 2 abtastenden Abtastmodul 4 dargestellt. Das Codierelement 2 ist dabei um eine im Querschnitt dargestellte Lenksäule 6 angeordnet, die aufgrund einer Drehung des Lenkrades des Fahrzeuges um die Achse 5 gedreht wird. Das kreisscheibenförmige bzw. ringscheibenförmige Codierelement 2 ist dabei mit der Lenksäule 6 drehfest verbunden. Das Codierelement 2 weist einen Gray-Code in Form von vier nebeneinander liegenden kreisförmigen Codespuren 7 auf.

An dem Codierelement 2 ist ein Mitnahmeelement 12 angeordnet, das zwei zahnartige Vorsprünge aufweist. Passiert das Mitnahmeelement 12 das ortsfest angeordnete Schrittschaltwerk 3, so wird dieses um die Achse 13 um einen Zählschritt verdreht. Da das Schrittschaltwerk 3 mit dem Codierelement 1 gekoppelt ist, bewegt sich aufgrund der Drehung des Schrittschaltwerks 3 das Codierelement 1 um einen Zählschritt in entweder die eine oder die andere, durch den Doppelpfeil 14 angedeutete Richtung.

Das in Fig. 1 gezeigte Ausführungsbeispiel weist lediglich ein Mitnahmeelement 12 auf. Denkbar ist jedoch, dass mehrere Mitnahmeelemente, beispielsweise zwei oder drei, in gleichem oder unterschiedlichem Abstand an dem Codierelement 2 angeordnet sind.

Das Codierelement 1 weist lediglich eine Codespur auf, welche einen geeigneten Gray-Code wiedergibt. Bei dem in Fig. 1 gezeigten Ausführungsbeispiel wird das Codierelement 1 pro voller Umdrehung der Lenksäule 6 um einen Zählschritt bewegt. Da ein Lenkrad bzw. die Lenksäule 6 eines Fahrzeuges maximal 4 - 6 volle Umdrehungen durchlaufen kann, kann das Codierelement 1 relativ klein ausgebildet werden.

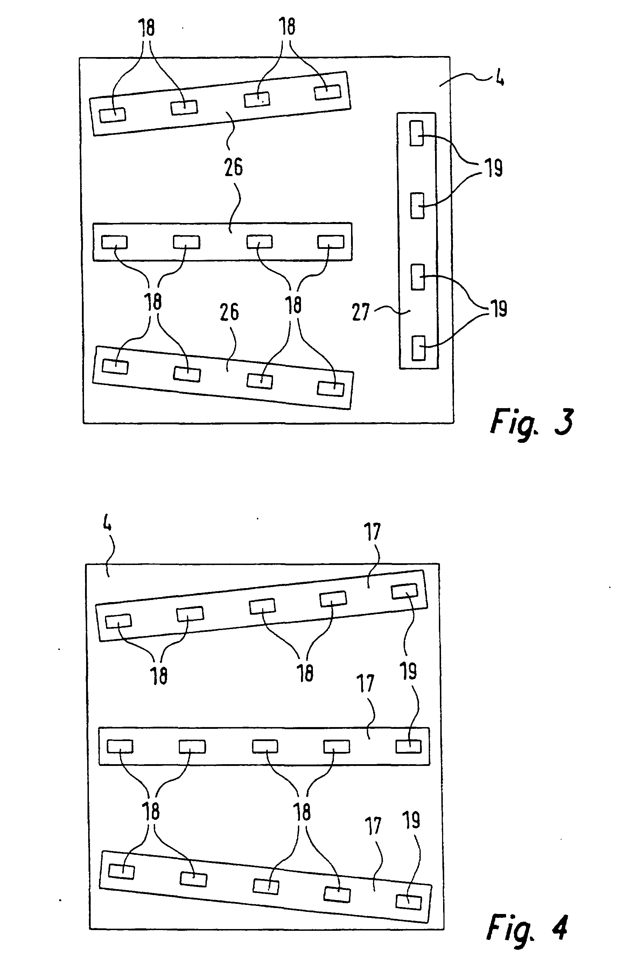

Wie in Fig. 1 deutlich zu erkennen ist, weist das Abtastmodul 4 drei radial um die Drehachse 5 des Codierelements 2 angeordnete Sensorarrays 17 auf. Fig. 4 zeigt diese Sensorarrays 17 in Einzelteildarstellung. Die identisch ausgebildeten Sensorarrays 17 weisen dabei jeweils fünf Einzelsensoren 18 und 19 auf. Die ersten vier Einzelsensoren 18 jedes Sensorarrays 17 sind zur Abtastung der vier Codespuren 7 des Codierelements 2 vorgesehen. Die jeweils letzten Einzelsensoren 19 tasten im Betrieb des Lenkwinkelsensors die eine Codespur des Codierelements 1 ab. Durch Verwendung eines entsprechenden Codes der beiden Codierelemente 1 und 2 kann über das Abtastmodul 4 bzw. die Sensorarrays 17 ein der Winkelstellung des Lenkrades entsprechendes Codewort abgetastet werden. Aufgrund des Codewortes kann die Bestimmung des entsprechenden Lenkwinkels vorgenommen werden.

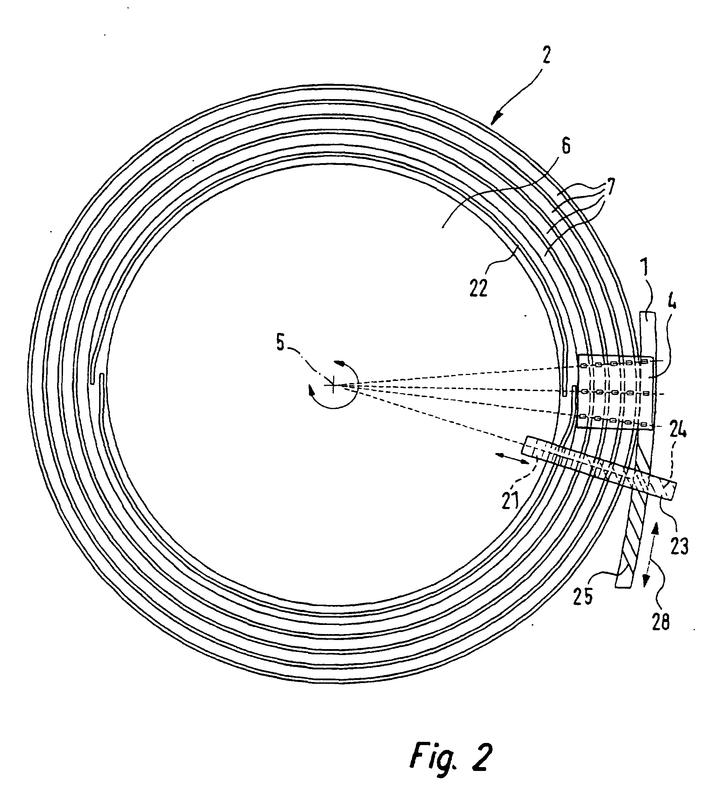

In dem Ausführungsbeispiel nach Fig. 2 weist das Codierelement 2 an seiner, der Lenksäule 6 zugwandten Seite einen Schneckentrieb 22 in Form eines die Lenksäule 6 spiralförmig umlaufenden Steges auf. Der Schneckentrieb 22 ist dabei mit einem Schieberelement 23 gekoppelt. Das Schieberelement weist auf seiner dem Steg des Schneckentriebes 22 zugewandten Seite Führungsnuten 21 zur Aufnahme des Steges auf. Aufgrund der Drehung des Codierelements 2 bzw. des Schneckentriebs 22 wird das Schieberelement 23 radial zu der Drehachse 5 verschoben. Das Schieberelement 23 weist auf seiner dem Codierelement 1 zugewandten Seite eine Schrägverzahnung 24 auf, die eine korrespondierende, an dem Codierelement 1 angeordnete Schrägverzahnung 25 kämmt. Bei Drehung des Lenkrades bzw. der Lenksäule 6 wird damit das Codierelement 1 kontinuierlich in entweder die eine oder andere durch den Pfeil 28 angedeutete Richtung bewegt. Entsprechend dem in Fig. 1 dargestellten Ausführungsbeispiel weist das Codierelement 1 nach Fig. 2 eine Codespur mit einem entsprechenden, nicht dargestellten Gray-Code auf. Das Abtastmodul 4 nach Fig. 2 entspricht dem Abtastmodul 4 der Fig. 1 bzw. dem nach Figur 4.

In Fig. 3 ist eine andere denkbare Anordnung von Sensorarrays 26 in einem Abtastmodul 4 gezeigt. Das in Fig. 3 gezeigte Abtastmodul 4 weist hierbei drei um die Achse 5 radial angeordnete Sensorarrays 26 und ein quer zu den Sensorarrays 26 angeordnetes Sensorarray 27 auf. Die drei Sensorarrays 26 und das eine Sensorarray 27 sind dabei identisch aufgebaut. Die Sensorarrays 26 mit jeweils vier Einzelsensoren 18 dienen dabei zur Abtastung der vier Codespuren 7 des Codierelements 2. Die vier Einzelsensoren 19 des Sensorarrays 27 sind zur Abtastung der einen Codespur des Codierelements 1 vorgesehen.

Wie aus Fig. 1 und 2 deutlich hervorgeht, sind die Sensorarrays 17 um den Winkel δ phasenversetzt angeordnet. Durch gleichzeitiges Abtasten der Codespuren 7 und der einen Codespur des Codierelements 1 kann ein Codewort gebildet werden, über welches der jeweilige Lenkwinkel bestimmbar ist.

## Patentansprüche

1. Lenkwinkelsensor, insbesondere zur Bestimmung des Lenkwinkels eines Fahrzeuges, bei dem mehrere Sensorarrays (17, 26) radial nebeneinander um die Drehachse (5) eines Codierelements (2) angeordnet sind, **dadurch gekennzeichnet, dass** die radial angeordneten. Sensorarrays (26). lediglich das eine Codierelement (2) abtasten und dass ein weiteres, quer zu den radial angeordneten Sensorarrays (17, 26) angeordnetes Sensorarray (27) vorhanden ist, das zur Abtastung eines weiteren Codierelements (1) vorgesehen ist.

2. Lenkwinkelsensor nach Anspruch 1, **dadurch gekennzeichnet, dass** die Sensorarrays (17, 26, 27) identisch ausgebildet sind.

3. Lenkwinkelsensor nach Anspruch 1 oder 2, **dadurch gekennzeichnet, dass** sämtliche Sensorarrays (17, 26, 27) in einem Abtastmodul (4) angeordnet sind.

4. Lenkwinkelsensor nach einem der vorhergehenden Ansprüche, **dadurch gekennzeichnet, dass** die Sensorarrays (17, 26) um einen Winkel δ phasenverschoben nebeneinander angeordnet sind.

5. Lenkwinkelsensor nach einem der vorhergehenden Ansprüche, **dadurch gekennzeichnet, dass** das weitere Codierelement (1) ein Kreisscheibensegment ist.

6. Lenkwinkelsensor nach einem der vorhergehenden Ansprüche, **dadurch gekennzeichnet, dass** das eine Codierelement (2) ein Schrittschaltwerk (3) schaltet, das bei einer definierten Drehung des einen Codierelements (2) das weitere Codierelement (1) antreibt.

7. Lenkwinkelsensor nach einem der Ansprüche 1 bis 5, **dadurch gekennzeichnet, dass** das eine Codierelement (2) einen schneckentrieb (22) aufweist, der über einen Schieber (23) das weitere Codierelement (1) antreibt.

## Claims

1. Steering angle sensor, in particular for determining the steering angle of a vehicle, wherein several sensor arrays (17, 26) are disposed radially adjacent each other about the axis of rotation (5) of a code element (2), **characterized in that** the radially disposed sensor arrays (26) read said code element (2) only and a further sensor array (27), which is disposed transverse to the radially disposed sensor arrays (17, 26), is provided for reading a further code element (1).

2. Steering angle sensor according to claim 1, **characterized in that** the sensor arrays (17, 26, 27) are of identical constitution.

3. Steering angle sensor according to claim 1 or claim 2, **characterized in that** all of the sensor arrays (17, 26, 27) are disposed in a reading module (4).

4. Steering angle sensor according to any one of the preceding claims, **characterized in that** the sensor arrays (17, 26) are disposed adjacent each other phase-shifted by an angle δ.

5. Steering angle sensor according to any one of the preceding claims, **characterized in that** the further code element (1) is a segment of a circular disk.

6. Steering angle sensor according to any one of the preceding claims, **characterized in that** said code element (2) operates a stepping mechanism (3), which actuates the further code element (1) at a predefined rotation of said code element (2).

7. Steering angle sensor according to any one of claims 1 to 5, **characterized in that** said code element (2) comprises a helical drive (22), which actuates the further code element (1) by way of a slider (23).

## Revendications

1. Capteur d'angle de braquage, en particulier pour la détermination de l'angle de braquage d'un véhicule, pour lequel plusieurs tableaux de capteurs (17, 26) sont disposés radialement l'un à côté de l'autre autour de l'axe de rotation (5) d'un élément de codage (2), **caractérisé en ce que** les tableaux de capteurs (26) disposés radialement palpent seulement l'un élément de codage (2) et **en ce qu'**il existe un autre tableau de capteurs (27) disposé transversalement par rapport aux tableaux de capteurs (17, 26), qui est prévu pour le palpage d'un autre élément de codage (1).

2. Capteur d'angle de braquage selon la revendication 1, **caractérisé en ce que** les tableaux de capteurs (17, 26, 27) sont d'une configuration identique.

3. Capteur d'angle de braquage selon la revendication 1 ou 2, **caractérisé en ce que** tous les tableaux de capteurs (17, 26, 27) sont disposés dans un module palpeur (4).

4. Capteur d'angle de braquage selon l'une des revendications précédentes, **caractérisé en ce que** les tableaux de capteurs (17, 26) sont disposés l'un à côté de l'autre, déphasés d'un angle δ.

5. Capteur d'angle de braquage selon l'une des revendications précédentes, **caractérisé en ce que** l'autre élément de codage (1) est un segment de disque circulaire.

6. Capteur d'angle de braquage selon l'une des revendications précédentes, **caractérisé en ce que** l'un élément de codage (2) commute un mécanisme pas à pas (3) qui, pour une rotation définie de l'un élément de codage (2), entraîne l'autre élément de codage (1).

7. Capteur d'angle de braquage selon l'une des revendications 1 à 5, **caractérisé en ce que** l'un élément de codage (2) comporte une commande à vis sans fin (22) qui entraîne l'autre élément de codage (1) par l'intermédiaire d'un poussoir (23).
